Europäisches Patentamt

European Patent Office

Office européen des brevets

(19)

(11) Publication number: **0 412 802 A1**

# EUROPEAN PATENT APPLICATION

(12)

(21) Application number: **90308737.7**

(22) Date of filing: **08.08.90**

(51) Int. Cl.5: **B60J 10/08**

(30) Priority: **09.08.89 GB 8918222**

(43) Date of publication of application:
**13.02.91 Bulletin 91/07**

(84) Designated Contracting States:
**BE DE DK ES FR GB IT NL**

(71) Applicant: **YORK TRAILER COMPANY LIMITED**
**Yafforth Road**
**Northallerton North Yorkshire, DL7 8UE(GB)**

(72) Inventor: **Prescott, Paul Conway**
**40 Lark Lane**
**Rippon, North Yorkshire HG4 2HW(GB)**

(74) Representative: **Allen, Oliver John Richard**
**Lloyd Wise, Tregear & Co. Norman House**
**105-109 Strand**
**London, WC2R 0AE(GB)**

(54) Improvements in and relating to seals for vehicles and containers.

(57) A seal unit (8;10) for use between the edges of two adjacent members (2,4;4,6) of the load-carrying compartment of a vehicle or container is described. The seal unit (8;10) comprises a carrier (12) secured to the edge of one of the members (4;6) and to which is mounted a first sealing element (16) which is compressed between the edges of the two members (2,4;4,6) and a second sealing element (18) which extends from the carrier (12) into an abutment with a side of the second member (2;4). A rigid cover element (22) is provided. In one embodiment, particularly suitable for use with a fixed member (2) and a movable member (4), the rigid cover element (22) is also mounted on the carrier (12). In the second embodiment, particularly suitable for two relatively movable members (4,6), the cover element (22) is mounted on a second carrier (24) secured to the edge of the second member (4). In either case the rigid cover (22) element is positioned so as to protect the sealing elements (16,18) from interference therewith.

*Fig. 1.*

EP 0 412 802 A1

This invention relates to trailers, semi-trailers, lorries and vans and containers for such vehicles and in particular to the seals employed between the members of such vehicles and containers.

Many different types of sealing arrangements are known. In one example of a door seal the seal unit simply comprises two seal members, one secured to each of the facing surfaces at the gap to be closed, which abut each other when the doors are closed. The seals consist of a pair of side by side compressible rubber rods which may be hollow. Another form of seal comprises a rigid generally U-shaped carrier which locates around, and is bonded with an adhesive or screwed to, the end of one of the parts and mounted on which are two curved flanges formed from flexible material. In use, one of the flanges is locates between the two parts, its free end abutting the second part whilst the second flange, which is longer and less curved, lies across the gap between the parts with its free end abutting a side face of the second part.

None of the known seals, including those described specifically above, are satisfactory from a security point of view. It is very desirable to be able to prevent the goods carried in the vehicles or containers from being tampered with and to prevent goods from being removed from or added to the vehicle or container without leaving some obvious sign that this has taken place. Indeed in some cases, for example TIR vehicles, it is not merely desirable that this should be the case, but in fact is a specific requirement.

One solution to the problem of providing a secure seal which prevents access to a vehicle or container which has been suggested is to employ known flexible rubber seals and to weld or bolt a metal plate across the seal between the two parts to which it is secured. This solution is expensive and highly susceptible to corrosion. A further suggestion is a specially shaped seal which is hard or, in use, fully compressed, the exterior of the seal being partly protected by the hinge between the two parts to which the seal is secured. The problems with this are that firstly the design of the seal is relatively complicated and therefore expensive, and the seals have been found to be inefficient, secondly it is difficult to ensure that the compression of the seal is such that nothing can be passed between the seal and parts to which it is secured. Thirdly for the arrangement to provide the necessary security the parts to which the seal is attached must be very accurately made and fitted which adds further to the expense.

In accordance with one aspect of the invention a seal unit for use between the edges of two adjacent members of the load-carrying compartment of a vehicle or container comprises a carrier secured to the edge of one of the members, mounted to which is a first sealing element which is compressed between the edges of the two members and a second sealing element which extends from the carrier into abutment with a side of the second member, and, a rigid cover element also mounted to the carrier which is so positioned as to protect the sealing elements from interference therewith.

The seal unit is particularly suitable for use with a fixed and a movable member, for example a wall of a container and a door thereof, the carrier being secured to the movable member.

In accordance with another aspect of the invention a seal unit for use between the edges of two adjacent members of the load-carrying compartment of a vehicle or container comprises a carrier secured to the edge of one of the members, mounted to which is a first sealing element which is compressed between the edges of the two members and a second sealing element which extends from the carrier into abutment with a side of the second member, and, a rigid cover element mounted on a second carrier secured to the edge of the second member which is so positioned as to protect the sealing elements from interference.

The seal unit is particularly suitable for use with two relatively movable members, for example, the two doors of a trailer.

The inclusion of a rigid cover element in the seal unit in a position to protect the sealing elements from interference means that the unit cannot be interfered with in the ways which were possible with flexible, unprotected sealing units through which objects could be passed. Furthermore the cover element can be arranged to give a visible indication of any attempts to tamper with it. Preferably this is achieved by arranging for the cover element to be in such a position relative to the sealing elements that any attempt to reach the sealing elements from the exterior of the load-carrying compartment or indeed to position anything between the sealing elements and the cover element requires the cover element to be prised back which, due to its rigidity, will lead to it snapping or at least becoming marked/deformed.

The cover element is preferably integrally formed with the carrier and the carrier and cover element are suitably made from rigid polyvinyl chloride.

The sealing elements are preferably mounted on the carrier such that one is at either extremity of the edge of the member to which the carrier is secured. They are suitably in the form of strips, one edge of which is mounted on the carrier, the width of the strips decreasing towards their free edge. The sealing elements may be formed such that they are curved in an unstressed position, and mounted on the carrier so that they curve toward the centre of the edge of the member to which the carrier is secured. The second sealing element is longer and curves less than the first sealing element.

The cover element is also suitably curved. The free end of the cover element can be arranged to abut the side of the other member to that on which it is carried so that there is no opening whatsoever to the sealing elements.

The carrier is suitably generally U-shaped and is arranged to be secured to the member with the web abutting the edge and the flanges abutting the sides. The carrier may be screwed, welded or bonded to the member.

The invention will now be further described by way of example with reference to the accompanying drawings in which:

Figure 1 is a section through three members intersealed by seal units in accordance with the invention;

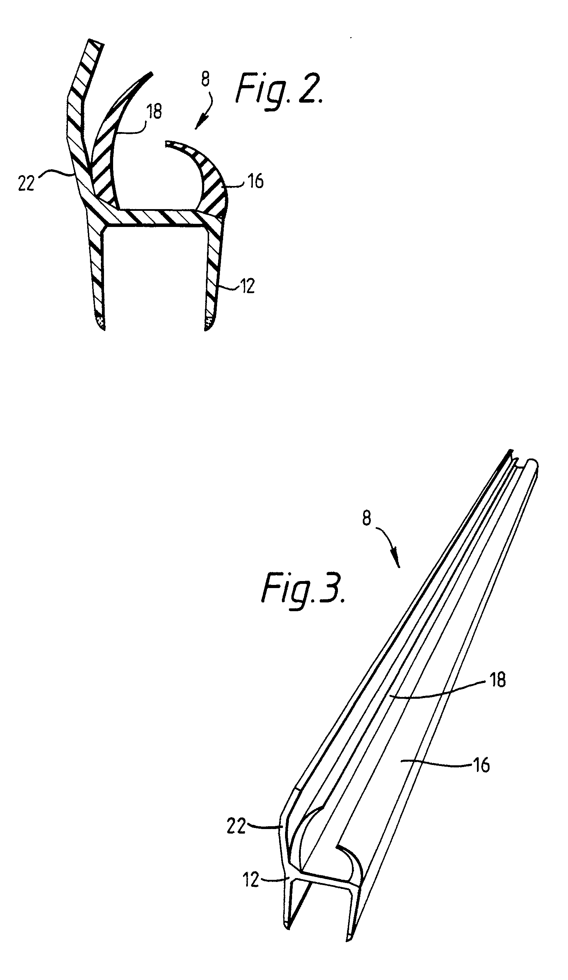

Figure 2 is a section through one of the seal units of Figure 1 and

Figure 3 is an oblique view of the seal unit of Figure 2.

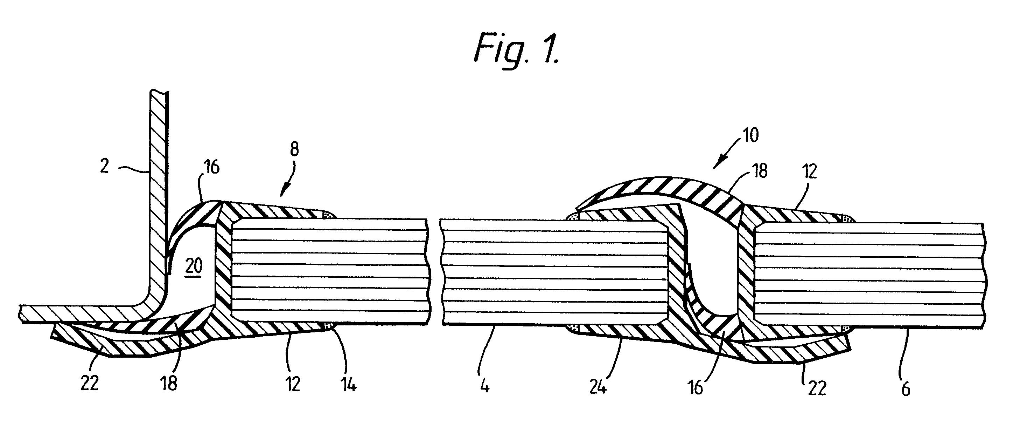

Figure 1 shows a door frame 2 and two doors 4, 6 of a trailer. A seal unit 8, 10 is provided between the frame 2 and the door 4 and the doors 4 and 6.

The seal unit 8 comprises a U-shaped carrier 12 which locates around and is bonded, see 14, by a suitable adhesive to the door 4 and a pair of sealing elements 16, 18 mounted on the carrier 12. The sealing elements 16, 18 are mounted at either extremity of the web of the carrier 12. Both sealing elements 16, 18, which are formed from flexible material, taper towards one end and are curved in their unstressed state. The sealing element 16 adjacent the interior of the trailer is curved through nearly 90° and is compressed between the edges of the frame 2 and the door 4. The sealing element 18 is less curved and is longer and its free end abuts the side of the door frame 2 to give a closed space 20 between the two sealing elements 16, 18. This space 20 serves to insulate the interior of the trailer.

Integrally formed with the carrier 12 and extending therefrom is a cover element 22 formed from rigid material, preferably rigid polyvinyl choride. The cover element 22 is also generally curved so that its end also abuts the side of the frame 2. This rigid cover 22 protects the sealing elements 16 and 18 from interference and any attempt to pull it back to try and reach the sealing elements 16, 18 will cause it to be marked/deformed due to its rigid nature or even snap. Thus the cover 22 cannot be tampered with without leaving a clear indication.

Seal unit 10 is similar to seal unit 8 and only the differences are discussed below. In this seal unit 10 a second carrier 24 is provided with which the cover element is integrally formed. The position of the two sealing elements 16 and 18 is reversed, that is, the longer, less curved element 18 is positioned on the side of the carrier 12 nearer the interior of the trailer and its free end abuts the second carrier 24.

When the two doors 4, 6 are opened the end of the cover element 20 slides along the first carrier 12 until it is free. To allow the door 4 to be swung open around the door frame 2, the hinge between the two has to be offset from the seal position outboard and backwards therefrom. This ensures that the end of the cover element 20 will slide along the door frame 2 and free itself. The shape of the cover elements 20 and the sealing elements 16, 18 ensures that they will always return to their correct sealing positions when the doors are closed.

The seal units 8 and 10 can be used between any two members of a container or vehicle, not just around the doors e.g. between the side boards and the walls. The seal unit 8 is particulary suitable where one member is movable relative the other which is fixed whilst seal unit 10 is suitable for two relatively movable members.

The seal units provide a simple and relatively inexpensive but very effective solution to the problem of providing a secure, tamper-proof seal which prevents any additions to or removals from the interior of the container or any tampering with the goods. The seal units are such that they will conform to TIR requirements.

**Claims**

1. A seal unit for use between the edges of two adjacent members of the load-carrying compartment of a vehicle or container comprising a carrier secured to the edge of one of the members, mounted to which is a first sealing element which is compressed between the edges of the two members and a second sealing element which extends from the carrier into abutment with a side of the second member, and, a rigid cover element also mounted to the carrier which is so positioned as to protect the sealing element from interference therewith.

2. A seal unit for use between the edges of two adjacent members of the load-carrying compartment of a vehicle or container comprising a carrier secured to edge of one of the members, mounted to which is a first sealing element which is compressed between the edges of the two members and a second sealing element which extends from the carrier into abutment with a side of the second member, and, a rigid cover element mounted on a second carrier secured to the edge of the second member which is so positioned as to protect the sealing elements from interference.

3. A seal unit as claimed in either Claim 1 or Claim 2 wherein the cover element is so arranged that any attempt to interfere with the seal unit would visibly alter the state of the cover element.

4. A seal unit as claimed in Claim 3 wherein the cover element is so positioned relative to the sealing element that any attempt to interfere with the sealing elements from the exterior of the loadcarrying compartment requires the cover element to be bent around resulting in deformation and marking and/or snapping of the cover element.

5. A seal unit as claimed in any preceding claim wherein the cover element in intergrally formed with the carrier on which it is mounted.

6. A seal unit as claimed in any preceding claim wherein the sealing elements are mounted on the carrier such that one is at either extremity of the edge of the member to which the carrier is secured.

7. A seal unit as claimed in Claim 1 to 6 wherein the sealing elements are so formed that they are curved in an unstressed position and so mounted on the carrier that they curve towards the center of the edge of the member to which the member is secured.

8. A seal unit as claimed in any preceding claim wherein the sealing elements are in the form of strips, one edge of which is mounted on the carrier, the width of the strips decreasing towards their free edges.

9. A sealing unit as claimed in any preceding claim wherein the cover element comprises a strip, one edge of which is mounted on the carrier, the free edge of the cover element strip being arranged to abut the side of the other member to that on which it is carried.

10. A sealing unit as claimed in any preceding claim wherein the carrier(s) is U-shaped and is arranged to be secured to the member with its web abutting the edge of the member and its flanges abutting the sides thereof.

Fig. 1.

Fig. 2.

Fig. 3.

## DOCUMENTS CONSIDERED TO BE RELEVANT

EP 90308737.7

| Category | Citation of document with indication, where appropriate, of relevant passages | Relevant to claim | CLASSIFICATION OF THE APPLICATION (Int. Cl.5) |
|---|---|---|---|
| X | DE - A1 - 3 115 684 (SCHMITZ) * Fig. 5; page 11, lines 13-19 * | 2-10 | B 60 J 10/08 |
| A | | 1 | |
| A | EP - A1 - 0 156 736 (BIZIEN) * Totality * | 1-10 | |
| A | US - A - 3 518 792 (WILLIAMSON, URBANICK) * Fig. 2-4 * | 1,2,6-8,10 | |

TECHNICAL FIELDS SEARCHED (Int. Cl.5)

B 60 J
B 60 R
B 62 D
B 65 D
E 06 B

The present search report has been drawn up for all claims

| Place of search | Date of completion of the search | Examiner |
|---|---|---|
| VIENNA | 20-11-1990 | WIDHALM |